**Europäisches Patentamt**

**European Patent Office**

**Office européen des brevets**

(19)

(11) **EP 0 984 307 A1**

(12) # DEMANDE DE BREVET EUROPEEN

(43) Date de publication:
**08.03.2000 Bulletin 2000/10**

(51) Int Cl.⁷: $G02B\ 6/16$

(21) Numéro de dépôt: **99402049.3**

(22) Date de dépôt: **12.08.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.08.1998 FR 9810383**

(71) Demandeur: **ALCATEL**
**75008 Paris (FR)**

(72) Inventeurs:
• **Paillot, Marianne**
**95350 Saint-Brice Sous Foret (FR)**
• **Rousseau, Jean-Claude**
**78400 Chatou (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(54) **Fibre optique monomode à dispersion décalée et à creux central**

(57) L'invention concerne une fibre optique mono-mode à dispersion décalée, présentant une gaine avec un indice ($n_3$) donné, et un coeur de fibre avec une partie centrale d'indice ($n_2$) inférieur à celui de la gaine et une partie externe d'indice ($n_1$) supérieur à celui de la gaine, le profil d'indice de ladite fibre étant tel que les parties centrale et externe du coeur sont reliées entre elles par un flanc incliné,
**caractérisée en ce que** le profil d'indice de la partie centrale d'indice ($n_2$) est en forme de "V".

FIG_3

**Description**

La présente invention a pour objet une fibre optique monomode à dispersion décalée et à creux central.

Les fibres optiques monomodes dites à dispersion décalée (DSF ou "dispersion shifted fibers") sont telles qu'à la longueur d'onde de transmission à laquelle elles sont utilisées, qui est en général différente de la longueur d'onde de 1,3 µm pour laquelle la dispersion de la silice est sensiblement nulle, la dispersion chromatique de l'onde transmise est sensiblement nulle; c'est-à-dire que la dispersion chromatique de la silice, non nulle, est compensée - d'où l'emploi du terme décalé- par une augmentation de l'écart d'indice $\Delta n$ entre le coeur de la fibre et la gaine optique. Cet écart d'indice permet de décaler la longueur d'onde pour laquelle la dispersion chromatique est nulle; il est obtenu par l'introduction de dopants dans la fibre, lors de la fabrication de celle-ci, par exemple par un processus de MCVD connu en soi, et qui n'est pas décrit plus en détail ici. Une valeur typique pour la différence d'indice entre la gaine et le coeur de la fibre est $24.10^{-3}$; l'augmentation de l'indice dans la silice peut être obtenue en utilisant comme dopant du germanium. Les termes de gaine et de coeur sont connus de l'homme du métier; classiquement on appelle gaine la partie qui s'étend jusqu'à un diamètre de 125 µm. Le coeur correspond à la partie où environ 70% de l'énergie lumineuse se propage.

On considère souvent dans les applications actuelles une longueur d'onde de transmission autour de 1,55 µm, pour laquelle on obtient une atténuation minimale de transmission de la lumière, de l'ordre de 0,2 dB/km.

Ces fibres monomodes doivent en outre présenter de préférence des caractéristiques qui correspondent aux exigences des câbliers et des systémiers : d'une part, pour les câbliers, une bonne "câblabilité", se traduisant par une capacité de courbure de la fibre, ce qui implique un diamètre de mode faible; d'autre part, pour les systémiers, une faible atténuation, ce qui suppose un diamètre de mode aussi grand que possible, une aire effective importante, une valeur appropriée de la longueur d'onde $\lambda_0$ de dispersion nulle. L'utilisation de ces fibres pour des systèmes de transmission à multiplexage en longueur d'onde rend les contraintes encore plus sévères.

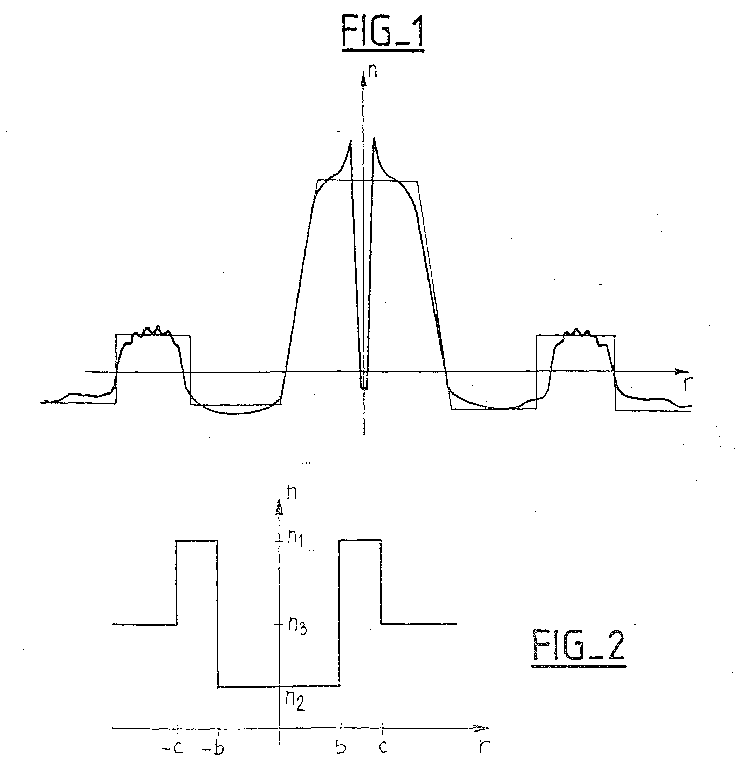

De nombreux profils d'indice ont été proposés pour de telles fibres optiques monomodes à dispersion décalée. Le profil d'indice est généralement qualifié en fonction de l'allure de la courbe représentative de l'indice en fonction du rayon de la fibre. On parle ainsi de profil d'indice en "échelon", en "trapèze" ou en "triangle" pour des courbes représentatives de la variation de l'indice en fonction du rayon qui présentent des formes respectives d'échelon, de trapèze ou de triangle. Ces courbes sont généralement représentatives du profil théorique ou de consigne de la fibre, les contraintes de fabrication de la fibre conduisant souvent à un profil sensiblement différent. Ainsi, FR-A-2 724 234 décrit une fibre optique monomode à dispersion décalée, présentant un profil d'indice en trapèze, ou dans les cas limites en triangle ou en rectangle, avec un anneau entourant le trapèze. La figure 1 montre en trait fin l'allure du profil de consigne proposé dans ce document, et en trait gras le profil mesuré sur une fibre effectivement fabriquée. Suivant l'habitude, les abscisses sur la figure 1 donnent la distance r au centre de la fibre, et les ordonnées l'indice, défini par sa différence en pour cent par rapport à l'indice de la gaine de la fibre. On constate notamment sur la figure 1, au voisinage du centre de la fibre, pour les valeurs de r proches de zéro, la présence d'un trou central dans le profil réel de l'indice ; ce trou central est classiquement provoqué par l'évaporation des dopants dans le processus de fabrication de la préforme. L'évaporation des dopants conduit à un indice au voisinage du centre de la fibre qui est légèrement supérieur à celui de la silice composant la fibre, dans le cas d'un dopant élévateur d'indice.

S.F. Mahmoud et A.M. Kharbat, Transmission characteristics of a coaxial optical fiber line, Journal of Lightwave Technology, vol. 11 n°11, novembre 1993, décrit un profil de consigne du type à "creux central", encore appelé profil coaxial, représenté à la figure 2. Comme représenté à la figure 2, la fibre présente une partie centrale, pour un rayon en module inférieur à une valeur b, présentant un indice constant d'une valeur $n_2$ inférieure à l'indice $n_3$ de la gaine ; autour de cette partie centrale, la fibre présente une partie annulaire d'indice $n_1$ supérieur à l'indice $n_2$ de la partie centrale et à l'indice $n_3$ de la gaine, pour des valeurs du module du rayon entre b et c. Dans une telle fibre, le décalage de la longueur d'onde de dispersion chromatique nulle est principalement lié aux différences d'indice $n_1-n_3$ entre l'anneau et la gaine, et $n_1-n_2$ entre l'anneau et la partie centrale de la fibre.

Ce type de profil coaxial est satisfaisant du point de vue du décalage de la longueur d'onde pour laquelle la dispersion chromatique est nulle. Toutefois, il conduit à des concentrations de dopants élevées dans le coeur de la fibre - des concentrations en dopant élévateur d'indice comme le germanium, par exemple dans la partie annulaire de la fibre à profil coaxial, ou des concentrations en dopant abaisseur d'indice comme le fluor, par exemple dans la partie centrale de la même fibre. Ces concentrations élevées présentent l'inconvénient d'augmenter l'atténuation de la fibre. La sensibilité au câblage de la fibre, par exemple mesurée par les pertes induites par un enroulement de la fibre autour d'une bobine d'un diamètre donné, pourrait aussi être améliorée.

On connaît également par le document WO 97/33188 une fibre optique monomode à dispersion décalée, présentant une gaine avec un indice ($n_3$) donné, et un coeur de fibre avec une partie centrale d'indice ($n_2$) inférieur à celui de la gaine et une partie externe

d'indice (n_1) supérieur à celui de la gaine, le profil d'indice de la fibre étant tel que les parties centrale et externe du coeur sont reliées entre elles par un flanc incliné. De plus, la partie centrale présente un profil en forme de "U", c'est-à-dire qu'elle présente un palier d'indice très inférieur à celui de la gaine.

Ce palier augmente le temps de la fabrication d'une telle fibre par rapport à une fibre classique, et pose également des problèmes de rendement de fabrication. En outre, il augmente l'effet du "trou central" dû à l'évaporation des dopants décrit en relation avec la figure 1.

L'invention propose une fibre optique monomode à dispersion décalée, qui permette de conserver les caractéristiques des fibres à profil coaxial connues du point de vue du décalage de la longueur d'onde pour laquelle la dispersion chromatique est nulle, mais qui diminue le temps de fabrication d'une telle fibre et améliore son rendement tout en réduisant les effets de l'évaporation des dopants au centre de la fibre. Elle permet d'obtenir des fibres présentant une atténuation plus faible que les fibres correspondantes de l'art antérieur, et/ou une sensibilité au câblage plus réduite.

Plus précisément, l'invention propose une fibre optique monomode à dispersion décalée, présentant une gaine avec un indice (n_3) donné, et un coeur de fibre avec une partie centrale d'indice (n_2) inférieur à celui de la gaine et une partie externe d'indice (n_1) supérieur à celui de la gaine, le profil d'indice de ladite fibre étant tel que les parties centrale et externe du coeur sont reliées entre elles par un flanc incliné, **caractérisée en ce que** le profil d'indice de la partie centrale d'indice (n_2) est en forme de "V".

Grâce à l'invention, la quantité de dopants dans la partie centrale est encore diminuée, ce qui conduit à une diminution supplémentaire de l'atténuation de la fibre optique selon l'invention par rapport à celles de l'art antérieur et contribue à faciliter la fabrication de la fibre en la rendant plus rapide et en augmentant son rendement. En effet, plus le volume de la partie d'indice très inférieur à celui de la gaine est faible, plus la fabrication est aisée. En outre, les conséquences de l'évaporation des dopants au centre de la fibre sont limitées, comme expliqué plus loin.

Dans un mode de réalisation, l'indice sur le flanc incliné est une fonction proportionnelle à $r^\alpha$, avec r le rayon, et l'exposant $\alpha$ un réel inférieur à 10.

Avantageusement, l'exposant est compris entre 0,80 et 1,20.

Dans un mode de réalisation, le profil d'indice de la partie externe d'indice (n_1) présente en outre un flanc sensiblement vertical. Ainsi, la quantité de dopants dans la partie externe est encore diminuée, ce qui conduit encore à une diminution de l'atténuation de la fibre obtenue.

Dans un autre mode de réalisation, le profil d'indice de la partie externe d'indice (n_1) présente deux flancs inclinés.

La fibre peut présenter en outre une deuxième partie d'indice (n_4) supérieur à celui de la gaine, située autour de ladite partie externe, et séparée de celle ci par une partie annulaire d'indice plus faible (n_5).

Dans ce cas, cette deuxième partie présente de préférence un profil d'indice avec au moins un flanc incliné.

D'autres caractéristiques et avantages de l'invention apparaîtront à la lecture de la description qui suit de divers modes de réalisation de l'invention, donnée à titre d'exemple et en référence aux dessins annexés dans lesquels :

- la figure 1 représente le profil d'indice de type trapèze et anneau d'une fibre connue,
- la figure 2 représente le profil d'indice de type coaxial d'une autre fibre connue,
- la figure 3 représente schématiquement le profil d'indice d'une fibre monomode dans un premier mode de réalisation de l'invention,
- la figure 4 représente schématiquement le profil d'indice d'une fibre monomode dans un deuxième mode de réalisation de l'invention,
- la figure 5 représente schématiquement le profil d'indice d'une fibre monomode dans un troisième mode de réalisation de l'invention,
- la figure 7 représente schématiquement le profil d'indice d'une fibre monomode dans un quatrième mode de réalisation de l'invention.

Dans toute la suite de la description, on considère les profils théoriques ou de consigne, tels que celui représenté en trait fin sur la figure 1.

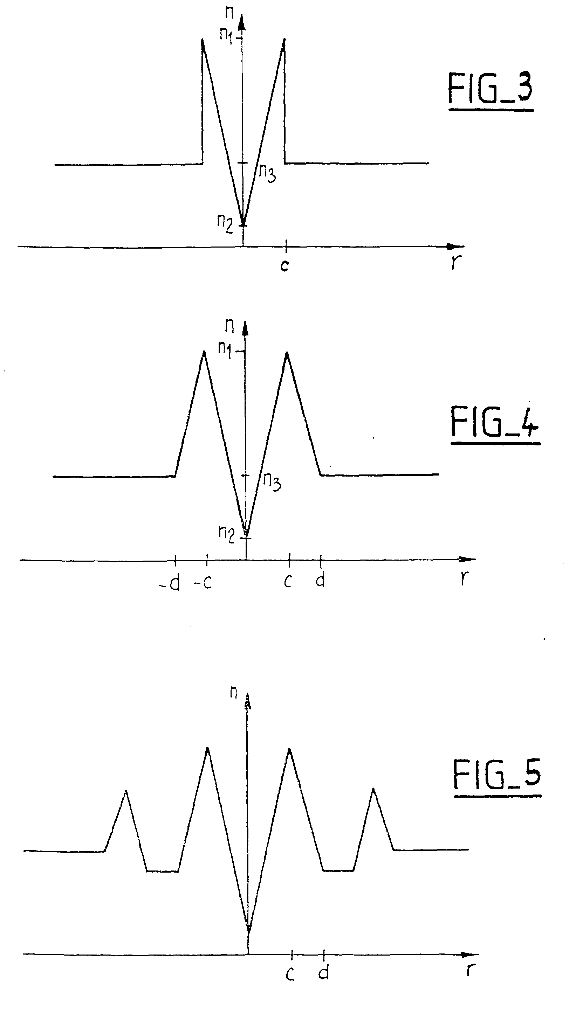

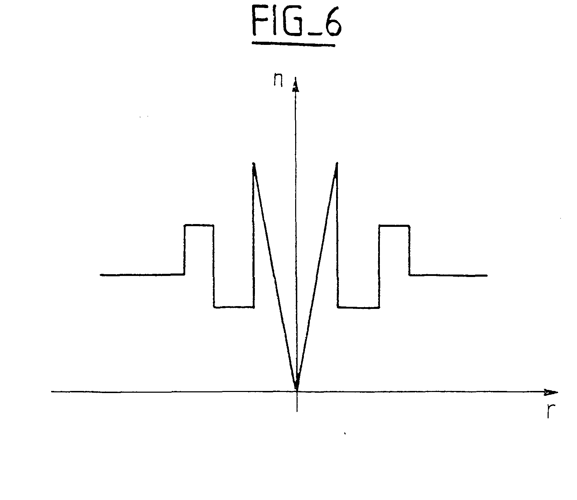

Les figures 3 et 4 montrent les profils d'indice de consigne de plusieurs modes de réalisation de l'invention, pour un profil coaxial avec une partie centrale d'indice inférieur à celui de la gaine, et une partie annulaire d'indice supérieur à celui de la gaine. Les figures 5 et 6 montrent un autre profil d'indice, pour un profil avec une partie centrale d'indice inférieur à celui de la gaine, et deux parties annulaires d'indice supérieur à celui de la gaine, ces deux parties présentant entre elles une partie d'indice plus faible.

La figure 3 montre une représentation schématique du profil d'indice d'une fibre monomode dans un premier mode de réalisation de l'invention ; dans le mode de réalisation de la figure 3, la fibre présente un profil d'indice dans sa partie centrale en creux avec des flancs inclinés ; autrement dit, la partie annulaire entourant la partie centrale en creux présente une forme sensiblement triangulaire, avec un flanc vers l'extérieur de la fibre sensiblement vertical, et un flanc incliné vers le coeur de la fibre. La partie centrale de la fibre, présentant un indice n_2 ne s'étend pas, autrement dit, avec les notations de la figure 2, b est nul. On a dans ce cas $\alpha$ = 1. Ce profil suit donc une loi d'indice du type :

$$\Delta(r) = n_2 + (n_1 - n_2)r/c \qquad \text{pour } 0 \leq r \leq c$$

$$\Delta(r) = n_3 \qquad \text{pour } r \geq c$$

Selon l'invention, la partie centrale de la fibre présente un profil d'indice en "V", et non pas en "U" comme dans l'art antérieur. En d'autres termes, le profil d'indice ne présente pas un plateau central, ou en termes de surfaces, la surface de la section de la fibre pour laquelle l'indice est $n_2$ est sensiblement nulle. Ceci permet un meilleur contrôle de la forme du profil : comme expliqué plus haut en référence à la figure 1, l'évaporation du dopant peut perturber le profil réel de l'indice au centre de la fibre. La présence d'un profil en V se traduit dans la fibre réelle par un profil présentant une forme plus adoucie, voisine d'une forme de U. On évite de la sorte les variations importantes de l'indice, du type de celles de la figure 1 au voisinage du centre de la fibre. On évite les guidages parasites dans le centre de la fibre.

Dans le mode de réalisation de la figure 3, la partie centrale de la fibre présente un indice $n_2 = -8.10^{-3}$ ; pour des rayons entre 0 et c = 4 $\mu$m, l'indice croît de façon linéaire, de manière à atteindre une valeur $n_1$ de $15.10^{-3}$ ; l'indice est l'indice $n_3$ de la silice pour les rayons au delà du rayon c.

Avec de telles valeurs, on trouve une atténuation R de 0,177 dB/km à 1550 nm, et une valeur de sensibilité aux courbures C de l'ordre de $10^{-9}$ dB/km. R est l'atténuation théorique du profil, et C la sensibilité aux courbures, calculée pour un enroulement de la fibre autour d'un rayon de 30 mm.

A titre de comparaison, on considère une fibre du type de celle de la figure 2, comme décrit dans la publication de S.F. Mahmoud, mais avec des valeurs d'indice $n_1 = + 10.10^{-3}$, $n_2 = - 5.10^{-3}$, $n_3$ étant l'indice de la silice, une partie centrale de rayon b valant 3,5 $\mu$m et une partie annulaire de rayon externe c valant 5 $\mu$m, on obtient pour une telle fibre des valeurs d'atténuation à 1550 nm R de 0,160 dB/km, et une sensibilité au câblage C de l'ordre de 10 dB/km.

Sur ce même type de fibre constituant l'art antérieur décrit dans la publication de S.F. Mahmoud, mais pour des valeurs d'indice $n_1 = + 12.10^{-3}$ et $n_2 = - 5.10^{-3}$ et un rayon c= 4 $\mu$m, on obtiendrait R= 0,172 dB/km et C = $10^{-2}$ dB/km à 1550 nm.

On constate ainsi qu'une fibre selon l'invention, telle que représentée sur la figure 3, présente une atténuation du même ordre de grandeur que celles selon la publication de S.F. Mahmoud, et un coefficient de sensibilité aux courbures infiniment meilleur ($10^{-9}$ dB/km dans le cas de l'invention; 10 dB/km ou $10^{-2}$ dB/km dans l'art antérieur).

La figure 4 montre une représentation schématique du profil d'indice d'une fibre monomode dans un deuxième mode de réalisation de l'invention. La fibre de la figure 4 présente comme celle de la figure 3, un indice $n_2$ inférieur à celui de la silice au voisinage du centre de la fibre, sur une surface nulle ou faible, b=0.

L'indice croît linéairement jusqu'à atteindre une valeur $n_1$ supérieure à l'indice de la silice, pour une valeur de rayon c = 3 $\mu$m ; il décroît ensuite linéairement pour atteindre la valeur $n_3$ pour une valeur de rayon d de 5 $\mu$m. Autrement dit, l'anneau autour du creux central présente une forme triangulaire, avec deux flancs inclinés.

On obtient pour une fibre avec un profil d'indice du genre de celui de la figure 4 une atténuation R de 0,171 dB/km à 1550 nm, et une valeur de sensibilité aux courbures de l'ordre de $10^{-9}$ dB/km.

Les fibres données à titre d'exemples dans les modes de réalisation présentent aussi une surface effective $A_{eff}$ et une longueur d'onde $\lambda_0$ de dispersion chromatique nulle compatibles avec les valeurs classiquement utilisées. Ainsi, dans l'exemple de la figure 3, on obtient une surface effective $A_{eff}$ de 95 $\mu$m$^2$, et une longueur d'onde $\lambda_0$ de l'ordre de 1430 à 1450 nm.

La figure 6 montre un exemple de réalisation de l'invention, au cas où le profil présente une partie centrale d'indice inférieure à celui de la gaine, et deux parties annulaires d'indices $n_1$ et $n_4$ supérieurs à celui de la gaine, séparées par une partie annulaire d'indice $n_5$ plus faible. Un tel profil à creux central avec deux anneaux est décrit, avec des sauts d'indice, dans EP-A-0 753 771.

Au moins l'un des sauts d'indice est remplacé par un flanc incliné. Dans l'exemple de la figure 5, les deux anneaux présentent la même structure qu'à la figure 4. Dans l'exemple de la figure 6, l'anneau externe est un anneau à saut d'indice classique, tandis que l'anneau immédiatement voisin de la partie centrale en creux présente l'allure de la figure 3.

On assure de nouveau les avantages mentionnés plus haut.

Bien entendu, la présente invention n'est pas limitée aux exemples et modes de réalisation décrits et représentés, mais elle est susceptible de nombreuses variantes accessibles à l'homme de l'art. On pourrait ainsi considérer d'autres plages de longueurs d'onde pour les signaux que la plage classique autour de 1550 nm, et d'autres dopants que ceux donnés à titre d'exemple. On pourrait aussi envisager d'autres combinaisons des modes de réalisation des figures 3 et 4 que celles mentionnées aux figures 5 et 6.

Dans les modes de réalisation préférés, la fibre présente un profil d'indice qui sur le ou les flancs incliné est proportionnel à $r^{\alpha}$, avec r le rayon et $\alpha$ un nombre réel. Ce nombre est avantageusement proche de 1, typiquement compris entre 0,80 et 1,20. Il peut aussi prendre des valeurs plus importantes, et des valeurs de l'ordre de 2 restent satisfaisantes. De préférence $\alpha$ reste inférieur strictement à 10.

Il est aussi possible que le profil d'indice soit un polynome du rayon r, de préférence un polynome de degré inférieur à 10. On peut aussi prévoir que l'indice soit une somme de fonctions du type $r^{\alpha_i}$, avec des $\alpha_i$ inférieurs à 10.

L'invention permet de réduire la teneur en dopant dans la fibre, et notamment de diminuer les concentrations en germanium pour élever l'indice. On peut de la sorte améliorer l'atténuation, tout en conservant un saut d'indice élevé, et des bonnes caractéristiques de décalage de la longueur d'onde pour laquelle la dispersion chromatique est nulle.

**Revendications**

1.  Fibre optique monomode à dispersion décalée, présentant une gaine avec un indice ($n_3$) donné, et un coeur de fibre avec une partie centrale d'indice ($n_2$) inférieur à celui de la gaine et une partie externe d'indice ($n_1$) supérieur à celui de la gaine, le profil d'indice de ladite fibre étant tel que les parties centrale et externe du coeur sont reliées entre elles par un flanc incliné,
    **caractérisée en ce que** le profil d'indice de la partie centrale d'indice ($n_2$) est en forme de "V".

2.  Fibre selon la revendication 1, caractérisée en ce que l'indice sur le flanc incliné est une fonction proportionnelle à $r^\alpha$, avec r le rayon, et l'exposant $\alpha$ un réel inférieur à 10.

3.  Fibre selon la revendication 2, caractérisée en ce que l'exposant est compris entre 0,80 et 1,20.

4.  Fibre selon l'une des revendications 1 à 3, caractérisée en ce que le profil de la partie externe d'indice ($n_1$) présente deux flancs inclinés.

5.  Fibre selon l'une des revendications 1 à 3, caractérisée en ce que le profil de la partie externe d'indice ($n_1$) présente un flanc incliné et un flanc sensiblement vertical.

6.  Fibre selon l'une des revendications 1 à 5, caractérisée en ce qu'elle présente en outre une deuxième partie d'indice ($n_4$) supérieur à celui de la gaine, située autour de ladite partie externe, et séparée de celle-ci par une partie annulaire d'indice plus faible ($n_5$).

7.  Fibre selon la revendication 6, caractérisée en ce que ladite deuxième partie présente un profil d'indice avec au moins un flanc incliné.

## FIG_1

## FIG_2

FIG_3

FIG_4

FIG_5

FIG_6

**Office européen des brevets**

## RAPPORT DE RECHERCHE EUROPEENNE

Numéro de la demande

EP 99 40 2049

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X,D | WO 97 33188 A (CORNING INC) 12 septembre 1997 (1997-09-12) | 1-4 | G02B6/16 |
| Y | * page 8, ligne 23 - page 9, ligne 12 * * figure 1A * | 5 | |
| Y,D | EP 0 779 524 A (CORNING INC) 18 juin 1997 (1997-06-18) * page 4, ligne 23 - ligne 25 * * figure 4 * | 5 | |
| A,D | EP 0 753 771 A (ALCATEL SUBMARCOM) 15 janvier 1997 (1997-01-15) * page 2, ligne 5 - ligne 6 * * page 4, ligne 39 - ligne 45 * * figure 3 * | 1 | |
| A,D | MAHMOUD S F ET AL: "TRANSMISSION CHARACTERISTICS OF A COAXIAL OPTICAL FIBER LINE" JOURNAL OF LIGHTWAVE TECHNOLOGY, vol. 11, no. 11, 1 novembre 1993 (1993-11-01), pages 1717-1720, XP000416667 * chapitre 'IV. Dispersion Behaviour' * | 1 | |
| A,D | FR 2 724 234 A (ALCATEL FIBRES OPTIQUES) 8 mars 1996 (1996-03-08) | 1 | |

DOMAINES TECHNIQUES RECHERCHES (Int.Cl.7)

G02B

Le présent rapport a été établi pour toutes les revendications

| Lieu de la recherche | Date d'achèvement de la recherche | Examinateur |
|---|---|---|
| BERLIN | 28 octobre 1999 | Luck, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 0 984 307 A1**

**ANNEXE AU RAPPORT DE RECHERCHE EUROPEENNE**
**RELATIF A LA DEMANDE DE BREVET EUROPEEN NO.**          EP 99 40 2049

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-1999

| Document brevet cité au rapport de recherche | | Date de publication | Membre(s) de la famille de brevet(s) | | Date de publication |
|---|---|---|---|---|---|
| WO 9733188 | A | 12-09-1997 | US 5684909 A | | 04-11-1997 |
| | | | AU 706828 B | | 24-06-1999 |
| | | | AU 3202197 A | | 22-09-1997 |
| | | | CA 2246445 A | | 12-09-1997 |
| | | | CN 1212057 A | | 24-03-1999 |
| | | | JP 11506228 T | | 02-06-1999 |
| EP 0779524 | A | 18-06-1997 | US 5715346 A | | 03-02-1998 |
| | | | AU 7417996 A | | 19-06-1997 |
| | | | BR 9605852 A | | 25-08-1998 |
| | | | CA 2192425 A | | 16-06-1997 |
| | | | CN 1160214 A | | 24-09-1997 |
| | | | JP 9274118 A | | 21-10-1997 |
| EP 0753771 | A | 15-01-1997 | FR 2736440 A | | 10-01-1997 |
| | | | CN 1166603 A | | 03-12-1997 |
| | | | JP 9033744 A | | 07-02-1997 |
| | | | US 5675690 A | | 07-10-1997 |
| FR 2724234 | A | 08-03-1996 | EP 0746786 A | | 11-12-1996 |
| | | | EP 0749024 A | | 18-12-1996 |
| | | | FI 961890 A | | 07-06-1996 |
| | | | FI 963697 A | | 18-09-1996 |
| | | | WO 9607942 A | | 14-03-1996 |
| | | | JP 9281354 A | | 31-10-1997 |
| | | | JP 9505909 T | | 10-06-1997 |
| | | | US 5659649 A | | 19-08-1997 |
| | | | US 5675688 A | | 07-10-1997 |

EPO FORM P0460